# EUROPÄISCHE PATENTSCHRIFT

(11) **EP 2 917 623 B1**
(45) Veröffentlichungstag und Bekanntmachung des Hinweises auf die Patenterteilung: **10.04.2019**
(21) Anmeldenummer: 13788674.3
(22) Anmeldetag: 29.10.2013
(51) Int. Cl.: F16K 35/10, F16K 11/072

(54) **EINHEBEL-MISCHBATTERIE**
SINGLE LEVER MIXING CARTRIDGE
CARTOUCHE MÉLANGEUR À POIGNÉE UNIQUE

(30) Priorität: 06.11.2012 DE 102012021624
(43) Veröffentlichungstag der Anmeldung: 16.09.2015
(73) Patentinhaber: Grohe AG, 58675 Hemer (DE)
(72) Erfinder: KOSTORZ, Ole, Benedikt, 58706 Menden (DE)
(86) Internationale Anmeldenummer: PCT/EP2013/003243
(87) Internationale Veröffentlichungsnummer: WO 2014/072031

(56) Entgegenhaltungen:
- DE-B3-102006 035 885
- US-A- 3 915 195
- US-A1- 2006 042 704
- US-B1- 6 170 523

## Beschreibung

Die Erfindung betrifft eine Einhebel-Mischbatterie für eine Sanitärarmatur zur Temperatur- und/oder Mengeneinstellung von Mischwasser nach dem Oberbegriff des Patentanspruches 1.

Bei der Temperatur- und/oder Mengeneinstellung von Mischwasser kann im Sanitärbereich eine Armatur verwendet werden, deren Betätigungshebel wie ein Joystick handhabbar ist.

Aus der EP 2 092 227 B1 ist eine Einhebel-Mischbatterie bekannt, die in eine solche Sanitärarmatur einsetzbar ist. Die Einhebel-Mischbatterie weist einen um zwei zueinander rechtwinklige Achsen um einen fixen Kipppunkt schwenkbar gelagerten Betätigungshebel auf, der nach Art eines Joysticks handhabbar ist. In der Mischbatterie ist ein umlaufender Begrenzungsanschlag vorgesehen, der einen Stellbereich definiert, innerhalb dem der Betätigungshebel in beliebigen Auslenkwinkeln und/oder -richtungen verstellbar ist.

Je nach Auslegung des Stellbereiches können maximal einstellbare Auslenkwinkel der Betätigungshebel in vielen Anwendungsfällen im Sanitärbereich zu unerwünscht hohen Temperaturen beziehungsweise zu unerwünscht hohen Mischwasser-Mengen führen, was im Hinblick auf eine Energieeinsparung sowie auf eine komfortable Betätigung von Nachteil ist.

Aus der DE 32 02 040 C2 ist eine nicht gattungsgemäße Einhebel-Mischbatterie für eine Sanitärarmatur bekannt, mit der die Mischwassertemperatur und/oder -menge einstellbar ist. Im Unterschied zur gattungsgemäßen Joystickbedienung ist hier der Betätigungshebel über eine Schwenkachse in einer Führungsbuchse drehbar gelagert. Die Führungsbuchse ist wiederum um eine zur Schwenkachse senkrechten Drehachse drehbar in der Mischbatterie gelagert. Die Mengeneinstellung erfolgt durch eine Schwenkbetätigung des Hebels um die in der Führungsbuchse festgelegte Schwenkachse. Demgegenüber erfolgt die Temperatureinstellung durch eine Drehbewegung des Hebels um die oben definierte Drehachse. Sowohl die Schwenkbewegung (Mengeneinstellung) als auch die Drehbewegung (Temperatureinstellung) sind durch Anschlagflächen an der Führungsbuchse und/oder durch eine Anschlagbuchse begrenzt.

Weiterhin ist aus der US 2006/0042704 A1 ein Einhebelmischventil bekannt, bei dem ein einzelner Bedienhebel sowohl die Temperatur- als auch die Fluidabgabe aus dem Ventil steuert. Mittels einer Platte, die eine Öffnung aufweist und über dem Bedienhebel positioniert ist, wird die Bewegung des Bedienhebels begrenzt. Ein Betätigungsring, der innerhalb des Gehäuses für das Ventil angeordnet ist, weist nach innenweisende Nockenflächen auf, die mit der Platte zusammenwirken, um entweder die maximale Temperatur oder die maximale Strömung durch das Ventil einzustellen.

Ein anderes Hebelventil für eine Sanitärarmatur mit Kaltwasser- und Warmwasserzuläufen ist aus der DE 10 2006 035 885 B3 bekannt. Das Hebelventil ist mit einem Gehäuse und einer Buchse versehen, die in dem Gehäuse drehbar gelagert ist. Ferner weist das Hebelventil einen Stellhebel auf, der zur Bewegung längs eines Kippweges um eine quer zur Längsachse der Buchse verlaufende Schwenkachse kippbar in der Buchse gelagert ist. Zur Steuerung des Wasserflusses ist ein Ventilglied, dass von dem Stellhebel um die Längsachse der Buchse zwecks Mischens von Kalt- und Warmwasser und bei Kippung um die Schwenkachse zwecks Einstellen der Durchflussmenge des Mischwassers verstellbar ist, bedienbar. Das dort beschriebene Hebelventil weist ferner einen Rastkörper auf, der bei einer Kippbewegung des Stellhebels eine überwindbare Begrenzung des Kippweges des Stellhebels erzeugt.

Die US 3,915,195 A offenbart einen Einhebelwasserhahn für das Mischen von heißem und kaltem Wasser und die Durchflussmengenregulierung, bestehend aus einem mit einer Kaltwasserzuleitung und einer Heißwasserzuleitung verbindbaren, eine Auslassleitung aufweisenden Ventilhauptgehäuse. In dem Ventilhauptgehäuse ist ein Ventilverschlusselement angeordnet, dass über einen handbedienbaren Griff bedient wird. Der Griff wird mittels einer Schablonenführung geführt, durch die er sich hindurch erstreckt und die durch ihre Form die Griffbewegung begrenzt.

Schließlich ist aus der US 6,170,523 B1 noch ein Ventil zur Regulierung der Wassertemperatur und zur Begrenzung der Wasserabgabe bekannt. Bei dem darin beschriebenen Ventil ist eine Temperaturbegrenzungskappe installiert, die die Drehbewegung eines Bedienhebels begrenzt und die schwenkbar im Ventil installiert ist. Die Einstellung der Grenztemperaturen erfolgt dabei unter Positionierung der Temperaturbegrenzungskappe in der jeweils gewünschten Position.

Die Aufgabe der Erfindung besteht darin, eine Einhebel-Mischbatterie für eine Sanitärarmatur zur Temperatur- und/oder Mengeneinstellung von Mischwasser bereitzustellen, bei der eine individuell an den Nutzer angepasste Mischwasser-Mengenbegrenzung sowie Temperaturbegrenzung ermöglicht ist.

Die Aufgabe ist durch die Merkmale des Patentanspruches 1 gelöst. Bevorzugte Weiterbildungen der Erfindung sind in den Unteransprüchen offenbart.

Die Erfindung beruht auf dem Sachverhalt, dass bei der oben erwähnten Einhebel-Mischbatterie mit Joystick-Bedienung lediglich ein werksseitig vorgegebener Basis-Stellbereich bereitgestellt ist, innerhalb dem der Betätigungshebel in beliebigen Auslenkwinkeln und/oder -richtungen verstellt werden kann. Vor diesem Hintergrund ist der erfindungsgemäßen Einhebel-Mischbatterie gemäß dem kennzeichnenden Teil des Patentanspruches 1 ein, insbesondere lösbar montiertes Stellelement zugeordnet. Mit Hilfe des Stellelementes kann im Bedarfsfall der werksseitig vorgegebene Basis-Stellbereich auf einen Teil-Stellbereich reduziert werden, in dem die vom Betätigungshebel einstellbaren Auslenkwinkeln und/oder -richtungen beschränkt sind.

In der erfindungsgemäßen Einhebel-Mischbatterie kann der umlaufende Bewegungsanschlag einen ersten lichten Öffnungsquerschnitt begrenzen, während das Stellelement einen zweiten lichten Öffnungsquerschnitt begrenzen kann. Je nach Positionierung des Stellelementes können die beiden Öffnungsquerschnitte einander unterschiedlich stark überschneiden, wodurch unterschiedlich groß bemessene reduzierte Teil-Stellbereiche realisierbar sind.

In einer Grundposition des Stellelementes kann bevorzugt nach wie vor unverändert der Basis-Stellbereich bereitgestellt sein. In diesem Fall kann sich der Öffnungsrand des Stellelementes radial außerhalb des Mischbatterie-Anschlags befinden oder gegebenenfalls auf gleicher Höhe wie der Mischbatterie-Anschlag verlaufen. Demgegenüber kann das an der Mischbatterie montierte Stellelement in einer Stellposition den lichten Öffnungsquerschnitt des Mischbatterie-Anschlagrandes teilweise überdecken, wodurch ein im Vergleich zum Basis-Stellbereich reduzierter Teil-Stellbereich bereitgestellt wird.

In einer Ausführungsform kann die Einhebel-Mischbatterie in etwa zylindrisch ausgeführt sein und einen durchmesserreduzierten, hülsenartigen Fortsatz aufweisen, durch dessen Durchlasskanal der Betätigungshebel geführt ist. In diesem Fall ist der Mischbatterie-Anschlag identisch mit dem Öffnungsrand der Mündungsöffnung an der Stirnseite des Mischbatterie-Fortsatzes.

Das Stellelement kann beispielhaft zumindest eine auf den Mischbatterie-Fortsatz setzbare Stellkappe sein. In deren stirnseitiger Bodenwand kann eine Einstellöffnung ausgebildet sein. Je nach Lage der Einstellöffnung wird der von der Mündungsöffnung definierte erste lichte Öffnungsquerschnitt unterschiedlich stark begrenzt. Die Stellkappe kann bevorzugt in unterschiedlichen Drehwinkelstellungen auf den Mischbatterie-Fortsatz lösbar aufgesetzt werden. Bevorzugt kann die Stellkappe an ihrer zylindrischen Innenwandung eine Innenverzahnung aufweisen, die mit einer korrespondierenden Außenverzahnung am Mischbatterie-Fortsatz in Steckeingriff bringbar ist. In der oben erwähnten Grundposition kann die Einstellöffnung der Stellkappe fluchtend mit der Mündungsöffnung des Mischbatterie-Fortsatzes ausgerichtet sein. Die beiden Öffnungen können zudem kreisrund sowie von gleichem Durchmesser sein.

In einer von der Grundposition unterschiedlichen Stellposition kann dagegen ein im Vergleich zum Basis-Stellbereich reduzierter Teil-Stellbereich eingestellt sein. Der Teil-Stellbereich kann bevorzugt gemeinsam von sowohl dem Öffnungsrand der Mündungsöffnung des Mischbatterie-Fortsatzes als auch dem Öffnungsrand der Einstellöffnung der Stellkappe in Lage und Größe definiert sein. Der Teil-Stellbereich ist somit nicht alleine vom Stellelement begrenzt, sondern vielmehr durch Zusammenspiel der Mischbatterie-Mündungsöffnung mit der Stellelement-Einstellöffnung begrenzt, wodurch das Stellelement bauraumgünstig gehaltert werden kann. Das Stellelement begrenzt somit nicht alleine den Teil-Stellbereich, sondern zusammen mit dem Mischbatterie-Anschlag.

Der oben erwähnte Basis-Stellbereich kann in Lage und Größe so bemessen sein, dass eine für den Nutzer zweckdienliche maximale Mengen- und Temperatureinstellung bereitstellbar ist. Hierzu kann es, je nach angestrebter Maximaltemperatur oder Maximalmenge, erforderlich sein, den Basis-Stellbereich außermittig, das heißt um einen Versatz exzentrisch zu einer, durch den Kipppunkt verlaufenden Längsachse des Betätigungshebels zu positionieren. In gleicher Weise kann auch die Einstellöffnung der Stellkappe um den Versatz exzentrisch zu der, durch den Kipppunkt verlaufenden Längsachse des Betätigungshebels positioniert sein. Auf diese Weise ist gewährleistet, dass in der oben genannten Grundposition die Stellkappen-Einstellöffnung und die vom Mischbehälter-Anschlagrand begrenzte Einstellöffnung fluchtend sowie deckungsgleich übereinander liegen.

Bevorzugt kann die vom Anschlagrand definierte Einstellöffnung und die Stellkappen-Einstellöffnung jeweils kreisrund gestaltet sein. Zur Erweiterung des lichten Öffnungsquerschnittes des Stellkappen-Einstellöffnung kann es zudem von Vorteil sein, wenn dessen kreisförmiger Öffnungsrand tangential in winklig zusammenlaufende Seitenflanken übergeht.

Das Stellelement kann in einer weiteren Ausführungsform zumindest zwei ineinander formschlüssig verschachtelbare Stellkappen aufweisen. Diese können bevorzugt in unterschiedlichen Drehwinkelstellungen miteinander kombiniert werden. Die aus den beiden Stellkappen bestehende Baueinheit kann wiederum ebenfalls in unterschiedlichen Drehwinkelpositionen auf dem Mischbatterie-Fortsatz aufgesetzt werden, wodurch die Lage und/oder Größe des resultierenden Teil-Stellbereiches passgenau einstellbar ist.

In einer weiteren Ausführungsform kann das Stellelement nicht als Stellkappe, sondern als ein Anschlagsteg ausgeführt sein, der bevorzugt lösbar auf den Mischbatterie-Fortsatz aufsteckbar ist. In der Grundposition kann der Anschlagsteg deckungsgleich mit dem Anschlagrand des Basis-Stellbereiches positioniert sein, wodurch unverändert der gesamte Basis-Stellbereich vom Betätigungshebel ansteuerbar ist. Demgegenüber kann der Anschlagsteg in einer Stellposition den Basis-Stellbereich teilweise überdecken, wodurch dieser bis auf den Teil-Stellbereich reduziert ist.

In einer weiteren Ausführungsform kann das Stellelement zwei zueinander rechtwinklig angeordnete Anschlagstege aufweisen. Diese können bevorzugt unabhängig voneinander verstellt werden, und zwar in unterschiedliche Stellpositionen, wodurch die Temperaturbegrenzung und die Mengenbegrenzung jeweils unabhängig voneinander verstellbar ist.

Das Stellelement ist bevorzugt in Anlage mit der Stirnseite des Mischbatterie-Fortsatzes. Auf diese Weise kann das Stelleelement in beliebige Stellpositionen verlagert werden, und zwar unter teilweiser Freigabe des Teil-Stellbereiches.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Teilschnittansicht eine Sanitärarmatur mit einem Betätigungshebel;
- Fig. 2: in einer Perspektivdarstellung eine Einhebel-Mischbatterie mit aufgesetzter Stellkappe;
- Fig. 3: in einer Explosionsdarstellung die Einhebel-Mischbatterie mit davon entfernter Stellkappe;
- Fig. 4: die Mischbatterie in einer Ansicht von oben mit einer in der Standartposition befindlichen Stellkappe;
- Fig. 5: in einer Ansicht entsprechend der Fig. 4 mit einer in einer Stellposition befindlichen Stellkappe;
- Fig. 6: die Stellkappe in einem weiteren Ausführungsbeispiel;
- Fig. 7 bis 9: jeweils Ansichten der Mischbatterie von oben mit der in der Fig. 6 gezeigten Stellkappe;
- Fig. 10: eine Teilschnittansicht einer Einhebel-Mischbatterie gemäß einem weiteren Ausführungsbeispiel;
- Fig. 11: in einer Ansicht entsprechend der Fig. 2 eine Einhebel-Mischbatterie gemäß einem weiteren Ausführungsbeispiel; und
- Fig. 12 bis 14: jeweils Ansichten der in der Fig. 11 gezeigten Einhebel-Mischbatterie von oben.

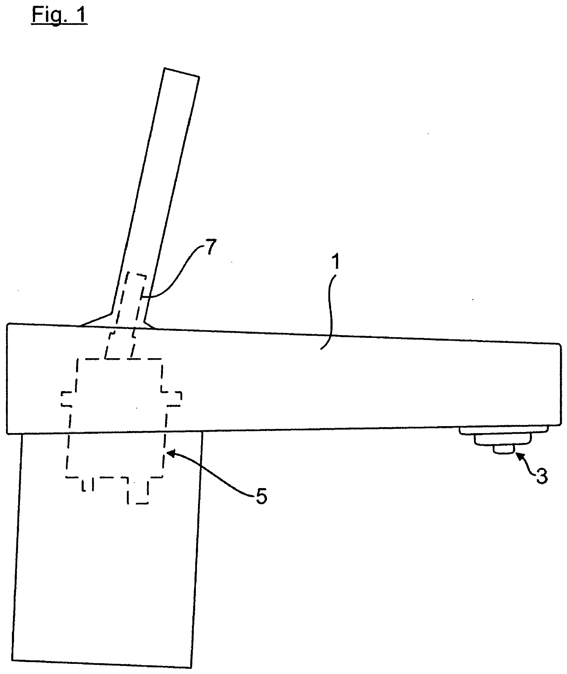

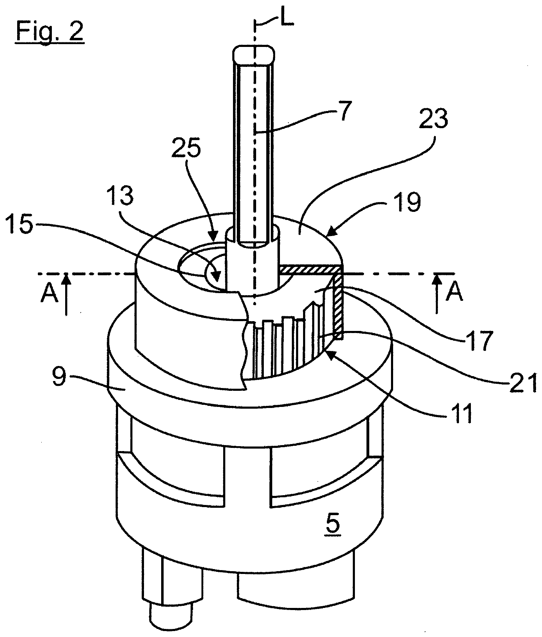

In der Fig. 1 ist in einer schematischen Darstellung eine Sanitärarmatur mit einem Armaturengehäuse 1 sowie einem Wasserauslauf 3 dargestellt. In der Strömungsrichtung betrachtet ist dem Wasserauslauf 3 eine Einhebel-Mischbatterie 5 vorgelagert, die in dem Armaturengehäuse 1 montiert ist. Mit Hilfe der Mischbatterie 5 erfolgt in an sich bekannter Weise eine Temperatur- und/oder Mengeneinstellung des durch die Sanitärarmatur geführten Mischwassers. Hierzu weist die Mischbatterie 5 einen nach oben ragenden Betätigungshebel 7 auf. Dieser ist gemäß der Fig. 2 wie ein Joystick um zwei zueinander rechtwinklige Achsen A1, A2 um einen Kipppunkt K innerhalb der Mischbatterie 5 nach Art eines Kugelgelenks gelagert. Der Betätigungshebel 7 ist zur Einstellung der Temperatur sowie Wassermenge in beliebigen Auslenkwinkeln sowie beliebigen Auslenkrichtungen verstellbar.

Durch Verstellen des Betätigungshebels 7 werden Strömungswege innerhalb der Mischbatterie 5 geöffnet und/oder geschlossen. Die hierzu erforderliche Ventilanordnung ist nicht Bestandteil der Erfindung und daher aus Gründen der Übersichtlichkeit weggelassen.

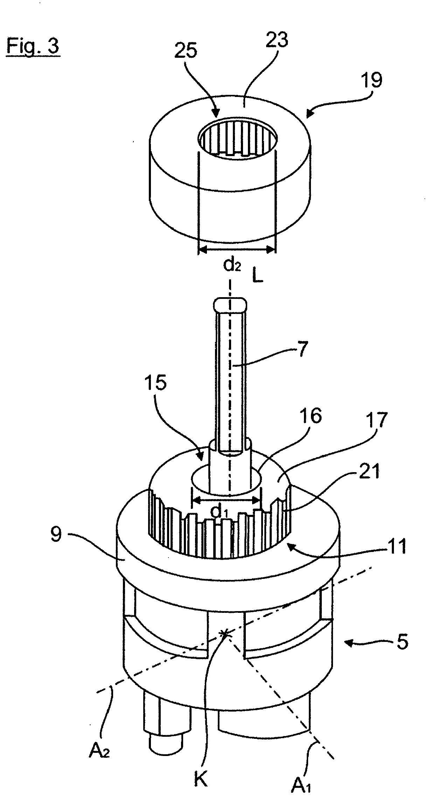

In der Fig. 2 ist die Mischbatterie 5 in Alleinstellung gezeigt. Demzufolge weist die Mischbatterie 5 einen zylindrischen Grundkörper 9 auf, der oben in einen durchmesserreduzierten, hülsenartigen Fortsatz 11 übergeht. Der Fortsatz 11 begrenzt einen Durchlasskanal 13 mit einer Mündungsöffnung 15 an dessen oberer Stirnseite 17. Gemäß der Fig. 2 ist auf dem Fortsatz 11 eine als Stellelement 19 wirkende Stellkappe lösbar aufgesetzt. Die Stellkappe 19 ist in Steckverbindung mit einer Außenverzahnung 21 des Fortsatzes 11. Zudem weist die Stellkappe 19 an ihrer oberen Stirnwand 23 eine Einstellöffnung 25 auf, durch die der Betätigungshebel 7 nach oben abragt. Die Mündungsöffnung 15 im Fortsatz 11 weist einen ersten lichten Öffnungsquerschnitt d₁ (Fig. 3) auf, durch den der Betätigungshebel 7 geführt ist. Zudem weist die Einstellöffnung 25 der Stellkappe 19 einen zweiten lichten Öffnungsquerschnitt d₂ (Fig. 3) auf, durch den ebenfalls der Betätigungshebel 7 geführt ist.

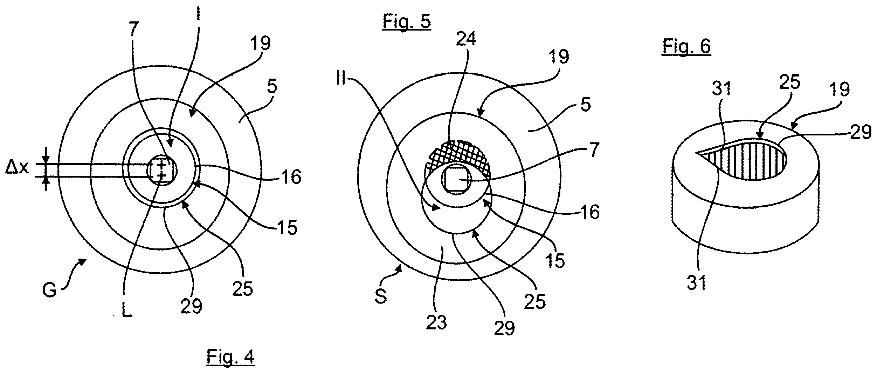

Bei der gemäß der Fig. 3 abgenommenen Stellkappe 19 bildet der Öffnungsrand 16 der an der Stirnseite 17 ausgebildeten Mündungsöffnung 15 einen Mischbatterie-Anschlag. Dieser definiert einen Basis-Stellbereich I (Fig. 4), innerhalb dem der Betätigungshebel 7 in beliebigen Auslenkwinkeln und/oder in beliebigen Auslenkrichtungen verstellbar ist. Durch Aufsetzen der Stellkappe 19 auf den Fortsatz 11 der Mischbatterie 5 kann, je nach Drehwinkelposition der Stellkappe 19, der Basis-Stellbereich I beibehalten werden oder der Basis-Stellbereich I auf einen Teil-Stellbereich II (Fig. 5) reduziert werden. Im Teil-Stellbereich II sind die Auslenkwinkel des Betätigungshebels 7 reduziert.

In der Fig. 4 ist die Stellkappe 19 in einer Grundposition G auf den Mischbatterie-Fortsatz 11 aufgesteckt. In der Grundposition G sind sowohl die Einstellöffnung 25 der Stellkappe 19 als auch die Mündungsöffnung 15 am Mischbatterie-Fortsatz 11 zueinander in Flucht ausgerichtet. Beide Öffnungen 15, 25 sind kreisrund und weisen gleiche Durchmesser auf. In der in der Fig. 4 gezeigten Grundstellung G sind die Einstellöffnung 25 und die Mündungsöffnung 15 zueinander fluchtend mit dem Querversatz Δx nach oben versetzt zur Längsachse L des Betätigungshebels 7 angeordnet.

Auf diese Weise ergibt sich in der, in der Fig. 4 gezeigten Grundstellung G, dass trotz montierter Stellkappe 19 unverändert der Basis-Stellbereich I zur Einstellung des Betätigungshebels 7 bereitgestellt ist.

In der Fig. 5 ist die Stellkappe 19 in einer Stellposition S gezeigt. Die Stellkappe ist im Vergleich zur Fig. 4 um einen Drehwinkel 180° im Uhrzeigersinn gedreht. Die Stirnwand 23 der Stellkappe 19 überdeckt einen mit Schraffur dargestellten Abschnitt 24 des lichten Öffnungsquerschnitt d₁ der Mündungsöffnung 15 des Fortsatzes 11. Somit ergibt sich ein Teil-Stellbereich II, der teilweise vom Öffnungsrand 29 der Einstellöffnung 25 der Stellkappe 19 und teilweise vom Öffnungsrand 16 der Mündungsöffnung 15 begrenzt ist.

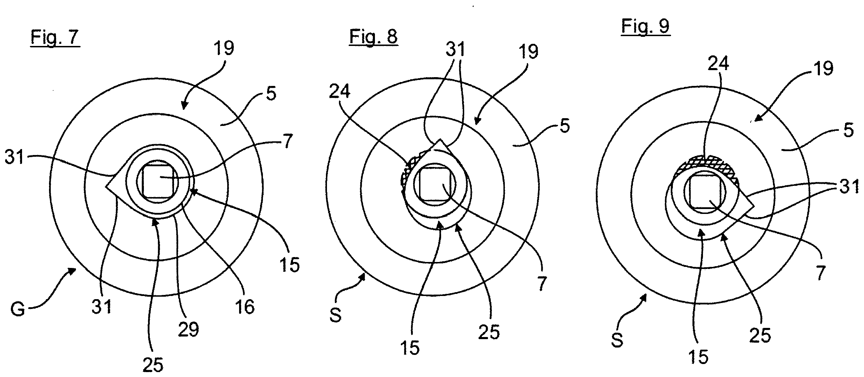

Anhand der Fig. 6 bis 9 ist die Stellkappe 19 gemäß einem zweiten Ausführungsbeispiel gezeigt. Gemäß der Fig. 6 verläuft der Öffnungsrand 29 der Einstellöffnung 25 der Stellkappe 19 nicht mehr kreisrund, sondern geht der kreisförmige Öffnungsrand 29 tangential in winklig zusammenlaufende Seitenflanken 31 über, wodurch sich insgesamt eine tropfenförmige Kontur der Einstellöffnung 25 ergibt. Je nach Drehwinkelposition der Stellkappe kann entweder der Basis-Stellbereich I oder ein reduzierter Teil-Stellbereich II eingestellt werden. In der Fig. 7 ist die Stellkappe 19 in ihrer Grundstellung G gezeigt, in der die Kreiskontur des Öffnungsrandes 29 fluchtend über dem Öffnungsrand 16 der Mündungsöffnung 15 liegt. Die Seitenflanken 31 überragen dagegen die Mündungsöffnung 15 seitlich nach außen. Dadurch ist trotz montierter Stellkappe 19 der Basis-Stellbereich I bereitgestellt.

In der Fig. 8 ist die Stellkappe 19 in einer ersten Stellposition S dargestellt, in der sie aus ihrer Grundposition G im Uhrzeigersinn um 90° gedreht ist. Demzufolge weisen die Seitenflanken 31 nach oben über die Mündungsöffnung 15 hinaus. Der in der Fig. 8 gezeigte linke Rand der Einstellöffnung 25 überdeckt den lichten Öffnungsquerschnitt d₁ der Mündungsöffnung 15 (durch Kreuzschraffur hervorgehoben). Auf diese Weise ergibt sich beispielhaft eine Temperaturbegrenzung, jedoch keine Mengenbegrenzung des Mischwassers.

In der Fig. 9 ist die Stellkappe 19 in einer weiteren Stellposition S dargestellt, in der sie um weitere 90° im Uhrzeigersinn gedreht ist. Demzufolge ergibt sich eine teilweise, durch Kreuzschraffur hervorgehobene Überdeckung des lichten Öffnungsquerschnittes d₁ der Mündungsöffnung 15. Dadurch erfolgt eine Mengenbegrenzung, während in der Fig. 9 zur Einstellung der Temperatur der gesamte Basis-Stellbereich nutzbar ist.

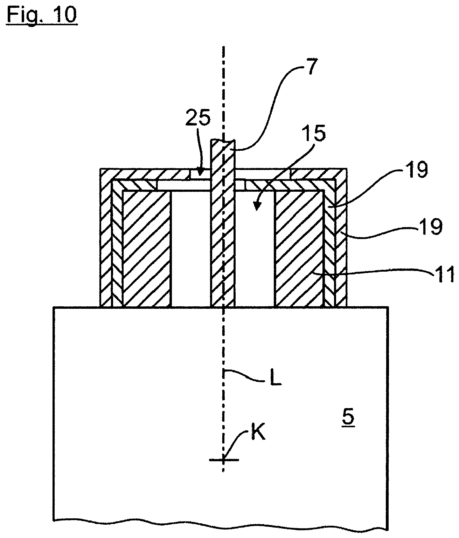

In der Fig. 10 ist eine Mischbatterie 5 gemäß einem weiteren Ausführungsbeispiel gezeigt. Demzufolge sind insgesamt zwei Stellkappen 19 vorgesehen, die ineinander formschlüssig verschachtelt sind. Die beiden Stellkappen 19 sind zueinander in Steckverzahnung, das heißt sie bilden im zusammengefügten Zustand eine verdrehsichere Baueinheit. Zudem ist die in der Fig. 10 dargestellte innere Stellkappe 19 ebenfalls in Steckverzahnung mit der Außenverzahnung 21 des Mischbatterie-Fortsatzes 11.

Die Einstellöffnungen 25 der beiden Stellkappen 19 sowie die Mündungsöffnung 15 des Fortsatzes 11 sind mit gleichem Durchmesser ausgeführt. In der Grundstellung G können die beiden Einstellöffnungen 25 sowie die Mündungsöffnung 15 zueinander fluchtend mit dem Querversatz Δx versetzt zur Längsachse des Betätigungshebels 7 angeordnet sein. Auf diese Weise ist auch hier gewährleistet, dass in der Grundposition G der Basis-Stellbereich I bereitgestellt ist. Demgegenüber können die beiden Stellkappen 19 zueinander in beliebiger Weise sowie als Baueinheit ebenfalls in beliebiger Weise auf den Mischbatterie-Fortsatz 11 aufgesetzt werden.

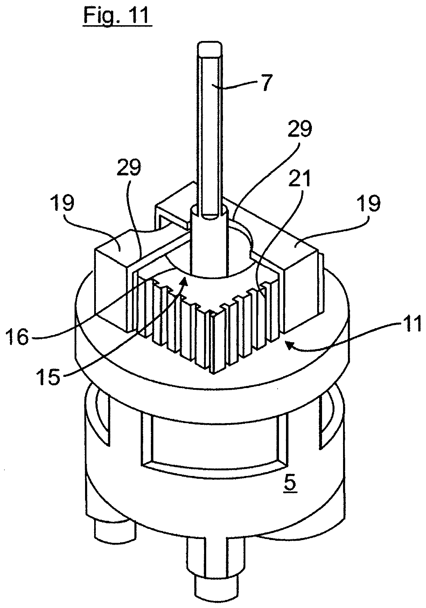

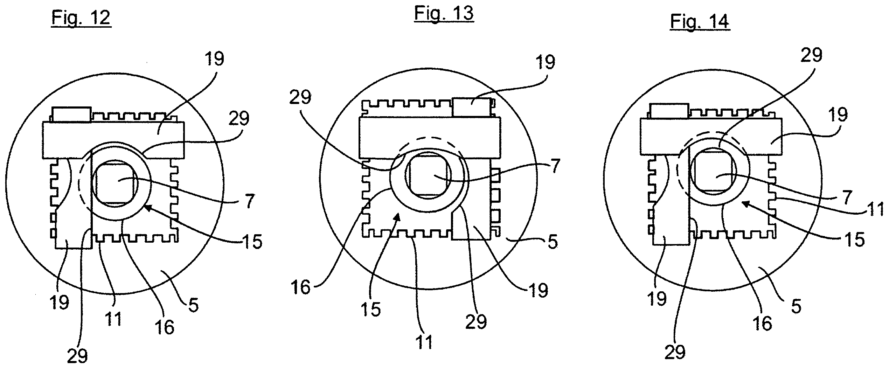

Anhand der Fig. 11 bis 14 ist ein weiteres Ausführungsbeispiel der Mischbatterie 5 gezeigt. Demzufolge ist der Fortsatz 11 nicht zylindrisch, sondern quaderförmig mit vier zueinander rechtwinkligen Seiten ausgeführt. Das Stellelement 19 ist zudem nicht als Stellkappe, sondern vielmehr als zwei zueinander separat verstellbare Anschlagstege ausgeführt. Die beiden Anschlagstege 19 sind in etwa klammerförmig ausgeführt und auf die Außenverzahnung 21 des rechtwinkligen Fortsatzes 11 aufsteckbar. Je nach Positionierung der beiden Anschlagstege 19 können diese zur Bereitstellung eines reduzierten Teil-Stellbereiches II den lichten Öffnungsquerschnitt d₁ der Mündungsöffnung 15 teilweise überdecken.

## Patentansprüche

1. Einhebel-Mischbatterie für eine Sanitärarmatur zur Temperatur- und/oder Mengeneinstellung von Mischwasser mit Hilfe eines Betätigungshebels (7), der nach Art eines Joysticks insbesondere um zwei zueinander rechtwinklige Achsen (A1, A2) um einen Kipppunkt (K) in der Mischbatterie (5) schwenkbar gelagert ist, welche Mischbatterie (5) einen, insbesondere umlaufenden Anschlag (16) aufweist, der einen Basis-Stellbereich (I) definiert, innerhalb dem der Betätigungshebel (7) in beliebigen Auslenkwinkeln und/oder -richtungen verstellbar ist und der Mischbatterie (5) ein insbesondere lösbar montiertes Stellelement (19) zugeordnet ist, mit dem der Basis-Stellbereich (I) auf einen Teil-Stellbereich (II) reduzierbar ist, in dem die vom Betätigungshebel (7) einstellbaren Auslenkwinkeln und/oder -richtungen beschränkt sind, **dadurch gekennzeichnet, dass** der umlaufende Mischbatterie-Anschlag (16) einen ersten lichten Öffnungsquerschnitt (d₁) begrenzt, durch den der Betätigungshebel (7) ragt und das Stellelement (19) zumindest einen Anschlagsteg aufweist, der in der Stellposition (S) den ersten lichten Öffnungsquerschnitt (d₁) des Mischbatterie-Anschlags (16) teilweise überdeckt und das Stellelement (19) einen zweiten Anschlagsteg aufweist, und dass die Anschlagstege (19) unabhängig voneinander verstellbar sind.

2. Einhebel-Mischbatterie nach Anspruch 1, **dadurch gekennzeichnet, dass** das Stellelement (19) einen zweiten lichten Öffnungsquerschnitt (d₂) begrenzt, durch den der Betätigungshebel (7) ragt.

3. Einhebel-Mischbatterie nach Anspruch 1 oder 2, **dadurch gekennzeichnet, dass** das Stellelement (19) in einer Grundposition (G) an der Mischbatterie (5) montierbar ist, in der das Stellelement (19) unverändert, d.h. ohne Reduzierung auf den Teil-Stellbereich (II), den Basis-Stellbereich (I) bereitstellt, und/oder dass das Stellelement (19) in zumindest einer Stellposition (S) an der Mischbatterie (5) montierbar ist, in der das Stellelement (19) den Basis-Stellbereich (I) auf den Teil-Stellbereich (II) reduziert.

4. Einhebel-Mischbatterie nach Anspruch 1, 2 oder 3, **dadurch gekennzeichnet, dass** das an der Mischbatterie (5) montierte Stellelement (19) zur Bereitstellung des reduzierten Teil-Stellbereichs (II) den vom Mischbatterie-Anschlag (16) definierten ersten lichten Öffnungsquerschnitt (d₁) teilweise überdeckt.

5. Einhebel-Mischbatterie nach einem der vorhergehenden Ansprüche, **dadurch gekennzeichnet, dass** der den ersten lichten Öffnungsquerschnitt (d₁) definierende Anschlag (16) der Öffnungsrand einer Mündungsöffnung (15) eines, in einem Mischbatterie-Fortsatz (11) ausgebildeten Durchlasskanals (13) ist, durch den sich der Betätigungshebel (7) erstreckt, und dass insbesondere das Stellelement (19) zumindest eine auf den Fortsatz (11) setzbare Stellkappe ist, in deren stirnseitiger Bodenwand (23) eine den zweiten lichten Öffnungsquerschnitt (d₂) begrenzende Einstellöffnung (25) ausgebildet ist.

6. Einhebel-Mischbatterie nach einem der vorhergehenden Ansprüche, **dadurch gekennzeichnet, dass** der im Vergleich zum Basis-Stellbereich (I) reduzierte Teil-Stellbereich (II) gemeinsam von sowohl dem Mischbatterie-Anschlag (16) als auch von dem Stellelement (19) in Lage und Größe definiert ist.

7. Einhebel-Mischbatterie nach Anspruch 5 oder 6, **dadurch gekennzeichnet, dass** die Stellkappe (19) in unterschiedlichen Drehwinkelstellungen auf dem Mischbatterie-Fortsatz (11) setzbar ist, und/oder dass die Einstellöffnung (25) der Stellkappe (19) und/oder die vom umlaufenden Mischbatterie-Anschlag (16) begrenzte Einstellöffnung (25) um einen Versatz (Δx) exzentrisch zu einer durch den Kipppunkt (K) verlaufenden Längsachse (L) des Betätigungshebels (7) ist.

8. Einhebel-Mischbatterie nach einem der vorhergehenden Ansprüche, **dadurch gekennzeichnet, dass** die vom umlaufenden Mischbatterie-Anschlag (16) definierte Mündungsöffnung (15) und/oder die in der Stellkappe (19) ausgebildete Einstellöffnung (25) jeweils kreisrund sind, und/oder dass zur Erweiterung des lichten Öffnungsquerschnitts (d₂) der Einstellöffnung (25) der Stellkappe (19) deren kreisförmiger Öffnungsrand tangential in winklig zusammenlaufende Seitenflanken (31) übergeht.

9. Einhebel-Mischbatterie nach einem der Ansprüche 5 bis 8, **dadurch gekennzeichnet, dass** das Stellelement (19) zumindest zwei ineinander formschlüssig verschachtelbare Stellkappen aufweist, die in unterschiedlichen Drehwinkelstellungen kombinierbar sind.

10. Einhebel-Mischbatterie nach einem der Ansprüche 5 bis 9, **dadurch gekennzeichnet, dass** das Stellelement (19) in Anlage mit einer Stirnseite (17) des Mischbatterie-Fortsatzes (11) ist, in der die Mündungsöffnung (15) des Durchlasskanals (13) ausgebildet ist.

## Claims

1. Single-lever mixer tap for a sanitary fitting for setting the temperature and/or amount of mixed water with the aid of an operating lever (7) which, in the manner of a joystick, is mounted about a pivot point (K) in the mixer tap (5) so as to be pivotable especially about two axes (A1, A2) that are at right-angles to one another, which mixer tap (5) has a stop (16), especially a circumferential stop, which defines an adjustment base-range (I) within which the operating lever (7) is adjustable in any desired displacement angles and/or directions and the mixer tap (5) is assigned an adjusting element (19), which is especially releasably mounted and with which the adjustment base-range (I) is reducible to an adjustment sub-range (II) in which the displacement angles and/or directions settable by the operating lever (7) are restricted, **characterised in that** the circumferential mixer tap stop (16) delimits a first internal opening cross-section (d₁) through which the operating lever (7) projects, and the adjusting element (19) has at least one stop web which in the adjustment position (S) partly covers the first internal opening cross-section (d₁) of the mixer tap stop (16), and the adjusting element (19) has a second stop web, and the stop webs (19) are movable independently of one another.

2. Single-lever mixer tap according to claim 1, **characterised in that** the adjusting element (19) delimits a second internal opening cross-section (d₂) through which the operating lever (7) projects.

3. Single-lever mixer tap according to claim 1 or 2, **characterised in that** the adjusting element (19) is mountable on the mixer tap (5) in a home position (G) in which the adjusting element (19) provides the adjustment base-range (I) without modification, that is to say without reduction to the adjustment sub-range (II), and/or the adjusting element (19) is mountable on the mixer tap (5) in at least one adjustment position (S) in which the adjusting element (19) reduces the adjustment base-range (I) to the adjustment sub-range (II).

4. Single-lever mixer tap according to claim 1, 2 or 3, **characterised in that,** to provide the reduced adjustment sub-range (II), the adjusting element (19) mounted on the mixer tap (5) partly covers the first internal opening cross-section (d₁) defined by the mixer tap stop (16).

5. Single-lever mixer tap according to any one of the preceding claims, **characterised in that** the stop (16) defining the first internal opening cross-section (d₁) is the rim of an opening (15) of a through-channel (13) which is formed in a mixer tap extension (11) and through which the operating lever (7) extends, and, especially, the adjusting element (19) is at least one adjusting cap which is positionable on the extension (11) and in the end-face base wall (23) of which there is formed a setting opening (25) which delimits the second internal opening cross-section (d2).

6. Single-lever mixer tap according to any one of the preceding claims, **characterised in that** the adjustment sub-range (II), which is reduced in comparison with the adjustment base-range (I), is defined in respect of its position and size by both the mixer tap stop (16) and the adjusting element (19) jointly.

7. Single-lever mixer tap according to claim 5 or 6, **characterised in that** the adjusting cap (19) is positionable in different rotation angle positions on the mixer tap extension (11), and/or the setting opening (25) of the adjusting cap (19) and/or the setting opening (25) delimited by the circumferential mixer tap stop (16) is eccentric by an offset (Δx) with respect to a longitudinal axis (L) of the operating lever (7) running through the pivot point (K).

8. Single-lever mixer tap according to any one of the preceding claims, **characterised in that** the opening (15) defined by the circumferential mixer tap stop (16) and/or the setting opening (25) formed in the adjusting cap (19) are each circular, and/or, to enlarge the internal opening cross-section (d₂) of the setting opening (25) of the adjusting cap (19), the circular rim thereof merges tangentially into side flanks (31) which converge at an angle.

9. Single-lever mixer tap according to any one of claims 5 to 8, **characterised in that** the adjusting element (19) has at least two adjusting caps capable of nesting interlockingly one inside the other, which caps are combinable in different rotation angle positions.

10. Single-lever mixer tap according to any one of claims 5 to 9, **characterised in that** the adjusting element (19) is in contact with an end face (17) of the mixer tap extension (11), in which end face the opening (15) of the through-channel (13) is formed.

## Revendications

1. Mitigeur à levier unique destiné à une robinetterie sanitaire pour permettre de régler la température et/ou le débit d'eau mélangée à l'aide d'un levier d'actionnement (7) qui est monté pivotant dans le mitigeur (5), à la manière d'une manette ou Joysticks en particulier autour de deux axes perpendiculaires (A1, A2) autour d'un point de basculement (K), ce mitigeur (5) comportant une butée (16) en particulier périphérique qui définit une zone de réglage de base (I) à la partie interne de laquelle le levier d'actionnement (7) peut être réglé selon des angles et/ou des directions de déviation quelconques, et au mitigeur (5) étant associé un élément de réglage (19), en particulier permettant de réduire amovible la zone de réglage de base (I) à une zone de réglage partiel (II) dans laquelle les angles et/ou les directions de déviation pouvant être réglées par le levier d'actionnement (7) sont limités,
**caractérisé en ce que**
la butée périphérique (16) du mitigeur délimite une première section d'ouverture libre (d₁) au travers de laquelle le levier d'actionnement (7) fait saillie, et l'élément de réglage (19) comporte au moins une nervure de butée qui dans la position de réglage (S) recouvre partiellement la première section d'ouverture libre (d₁) de la butée (16) du mitigeur, et l'élément de réglage (19) comporte une seconde nervure de réglage, les nervures de butée (19) pouvant être réglées indépendamment l'une de l'autre.

2. Mitigeur à levier unique conforme à la revendication 1,
**caractérisé en ce que**
l'élément de réglage (19) délimite une seconde section d'ouverture libre (d₂) au travers de laquelle fait saillie le levier d'actionnement (7).

3. Mitigeur à levier unique conforme à la revendication 1 ou 2,
**caractérisé en ce que**
l'élément de réglage (19) peut être monté sur le mitigeur (5) dans une position de base (G) dans laquelle l'élément de réglage (19) fournit la zone de réglage de base (I) non modifiée, c'est-à-dire non réduite à la zone de réglage partiel (II) et/ou l'élément de réglage (19) peut être monté sur le mitigeur (5) dans au moins une position de réglage (S) dans laquelle l'élément de réglage (19) réduit la zone de réglage de base (I) à la zone de réglage partiel (II).

4. Mitigeur à levier unique conforme à la revendication 1, 2 ou 3,
**caractérisé en ce que**
pour fournir la zone de réglage partiel réduite (II) l'élément de réglage (19) monté sur le mitigeur (5) recouvre partiellement la première section d'ouverture libre (d₁) définie par la butée (16) du mitigeur.

5. Mitigeur à levier unique conforme à l'une des revendications précédentes,
**caractérisé en ce que**
la butée (16) définissant la première section d'ouverture libre (d₁) est le bord d'une ouverture d'embouchure (15) d'un canal de passage (13) formé dans un prolongement (11) du mitigeur, au travers de laquelle s'étend le levier d'actionnement (7), et, en particulier l'élément de réglage (19) est au moins un capuchon de réglage pouvant être positionné sur le prolongement (11) dans la paroi de fond côté frontal (23) duquel est formée une ouverture de réglage (25) délimitant la seconde section d'ouverture libre (d₂).

6. Mitigeur à levier unique conforme à l'une des revendications précédentes,
**caractérisé en ce que**
la zone de réglage partiel (II) réduite par rapport à la zone de réglage de base (I) est définie conjointement en position et en dimensions par la butée (16) du mitigeur et par l'élément de réglage (19).

7. Mitigeur à levier unique conforme à la revendication 5 ou 6,
**caractérisé en ce que**
le capuchon de réglage (19) peut être positionné dans des positions de rotation angulaire différentes sur le prolongement (11) du mitigeur, et/ou l'ouverture de réglage (25) du capuchon de réglage (19) et/ou l'ouverture de réglage (25) délimitée par la butée périphérique (16) du mitigeur est excentrée d'un écart (Δx) par rapport à l'axe longitudinal (L) du levier d'actionnement (7) passant par un point de basculement (K).

8. Mitigeur à levier unique conforme à l'une des revendications précédentes,
**caractérisé en ce que**
l'ouverture d'embouchure (15) définie par la butée périphérique (16) du mitigeur et/ou l'ouverture de réglage (25) formée dans le capuchon de réglage (19) est(sont) circulaire(s), et/ou pour permettre d'élargir la section d'ouverture libre (d₂) de l'ouverture de réglage (25) du capuchon de réglage (19) son bord d'ouverture circulaire se prolonge tangentiellement par des flancs latéraux (31) convergeant angulairement.

9. Mitigeur à levier unique conforme à l'une des revendications 5 à 8,
**caractérisé en ce que**
l'élément de réglage (19) comporte au moins deux capuchons de réglage pouvant s'imbriquer l'un dans l'autre par une liaison par la forme qui peuvent être combinés dans des positions de rotation angulaire différentes.

10. Mitigeur à levier unique conforme à l'une des revendications 5 à 9,
**caractérisé en ce que**
l'élément de réglage (19) vient en appui contre une face frontale (17) du prolongement (11) du mitigeur dans laquelle est formée l'ouverture d'embouchure (15) du canal de passage (13).
